# EUROPEAN PATENT SPECIFICATION

(11) **EP 0 419 057 B1**
(45) Date of publication and mention of the grant of the patent: **06.12.1995**
(21) Application number: 90309303.7
(22) Date of filing: 24.08.1990
(51) Int. Cl.: F16F 1/36, F16F 3/08

(54) **Improvements relating to elastomeric springs**
Verbesserungen an Federn aus elastomerem Material
Améliorations aux ressorts élastomères

(30) Priority: 25.08.1989 GB 8919338; 11.04.1990 GB 9008275
(43) Date of publication of application: 27.03.1991
(73) Proprietor: MATERIALS ENGINEERING RESEARCH LABORATORY LTD, Hertford SH13 7DG (GB)
(72) Inventor: Stevenson, Andrew, c/o M.E.R.L., Hertford SG13 7DG (GB); Harris, John, c/o M.E.R.L., Hertford SG13 7DG (GB)
(74) Representative: Milhench, Howard Leslie

(56) References cited:
- DE-A- 2 319 425
- DE-B- 1 260 884
- DE-C- 662 622
- FR-A- 1 536 401
- FR-A- 2 523 611
- FR-A- 2 636 696
- GB-A- 1 074 969
- GB-A- 2 207 730
- LU-A- 64 563

## Description

### Field of the Invention:

This invention concerns improvements in and relating to elastomeric springs, particularly though not exclusively for use in the suspension systems of automobiles and other vehicles.

### Background of the Invention:

Elastomers have been used for many years as anti-vibration components in the suspension systems of automobiles and other vehicles. Modern automobiles may contain more than a dozen different elastomeric components such as bushes, mounts etc. Primary suspension is still usually a conventional steel spring with a hydraulic damper, the system often incorporating an elastomeric top mount. Elastomeric components are widely used in anti-vibration systems in automobiles and other ground vehicles as well as in aerospace applications. They can combine low spring rates with low or high damping to attenuate vibration. The ability to attenuate vibrations will in general depend on both the amplitude and frequency of the input vibration. Thus although vibration isolation or damping may be very successful for one source condition, it may be quite ineffective for another source condition. It is a feature of vehicles that a large number of different vibrations from different sources will often be simultaneously superimposed.

Current design procedures for elastomeric anti-vibration devices are usually a compromise aimed at dealing with the worst of the vibrations. Isolation of vibrations is always preferable if natural frequencies of resonance can be made low enough compared to the input frequencies. This often cannot be ensured when dealing with a spectrum of inputs, especially with conventionally designed anti-vibration mounts. Damping is then required to reduce resonant effects (or impact responses), but usually at the expense of isolation of higher frequencies. Design needs to balance these two functions. In addition, design is usually based on an approximation to linear materials behaviour although it is well known that elastomers have non-linear static and dynamic force deflection behaviour.

One reason that elastomers have not been more extensively used as primary suspension components is that engineers are generally unfamiliar with non-linear materials and so designs have tended to minimise non-linear aspects, to the detriment of exploiting the full potential of elastomeric components.

In GB-A-2207730 there is disclosed a compression spring which is particularly, though not exclusively, useful in vehicle suspension applications and which has an extended plateau region in its force deflection characteristics, such extended plateau being obtained by virtue of the formation of the spring as a tubular elastomer body of progressively increasing cross-section from one end to the other provided with longitudinally spaced-apart reinforcements defining bulging instability sites therebetween, the spring when under compression undergoing bulging sequentially at said sites. More generally, the invention disclosed in GB-A-2207730 provides a compression spring comprising an elongate tubular elastomer body provided with longitudinally spaced-apart reinforcements defining therebetween sites for local bulging instabilities, and wherein the spring is constrained to develop such local bulging instabilities sequentially throughout said sites when under compressive load by virtue of the spring having a non-uniform cross-section progressing from a lesser to a greater end of the spring.

The elastomeric spring of GB-A-2207730 is contrasted in the description of the same with the spring of EP-A-0184848 which comprises a tubular elastomeric body having a coil spring embedded in and bonded to it, the coil spring being said to control the occurrence of symmetric bulging instability in the elastomeric body under axial load conditions so that the bulging instability occurs sequentially along the length of the body between adjacent coils of the coil spring; by virtue of this arrangement, the force : deflection characteristic of the composite spring was said to be controllable to provide selected stiff and soft regions in accordance with specific requirements. However, as is explained in GB-A-2207730, our belief was that a composite spring device as described in EP-A-0184848 may not be capable of achieving characteristics significantly different from those obtained by prior art devices, and in accordance with the invention of GB-A-2207730 we proposed that the elastomer body be constrained to buckle progressively in a predetermined manner by appropriately configuring the body and/or any composite materials associated therewith. More particularly we proposed, inter alia, that the elastomeric body should have a generally frusto-conical shape, advantageously with axially spaced-apart annular reinforcements.

### Summary of the Invention:

The present invention provides a compression spring comprising an elongate tubular elastomer body provided with longitudinally spaced-apart reinforcements defining therebetween sites for local bulging instabilities, said spring being formed as a plurality of individual spring elements assembled together and each of said spring elements being formed as a frustoconical elastomer body having an annular reinforcing ring bonded thereto at each axial end face thereof and extending over at least substantially the entire extent of the respective end face. Such a spring is known from LU-A-64563 (which corresponds to GB-A-1 381 749). However, the known spring of LU-A-64563 is not designed for the purpose of producing sequential bulging instabilities under compression and does not develop a non-linear force deflection characteristic having at least one plateau region between higher stiffness regions. According to the present invention a spring such as known from LU-A-64563 is characterized in that said plurality of spring elements includes elements formed of different elastomeric materials, such different elastomeric materials having different force : deflection characteristics, and/or elements formed of the same elastomeric material but exhibiting different force : deflection characteristics by virtue of dimensional and/or shape differences between the respective spring elements, the arrangement being such that the spring is constrained to develop said local bulging instabilities sequentially throughout said sites when under compressive load in such a manner as to provide the spring with a non-linear force : deflection characteristic having at least one plateau region between higher stiffness regions.

As will be more particularly described in the following, the present invention in one specific exemplary embodiment provides annular-sectioned frustoconical elastomer elements desirably having a cone angle of from 2° to 28° and preferably from 5° to 15°. The frustoconical elastomer elements incorporate annular reinforcing rings firmly bonded to the elastomeric material at their axial end faces, the reinforcing rings preferably being simple flat metal pressings or simple circular section metal rings though they could take other forms and be formed of other materials.

The invention contemplates that such annular-sectioned frustoconical elastomer elements might be used in multiple combinations with other elastomer elements, possibly of like kind, to obtain specifically required force : deflection characteristics. An elastomeric spring formed as a combination of two or more elastomer spring elements might thus be formed of one and the same elastomeric material throughout, in which case dimensional and/or shape variations as between one element and another might be utilized to tailor the required characteristics. Alternatively and in accordance with a preferred and advantageous feature of the present invention, different elastomeric materials having different force : deflection characteristics can be utilized so that the overall spring deflection characteristic is the aggregate of a plural number of different elemental characteristics selected according to the required application of the spring. By virtue of such a multiple elastomer spring construction a spring exhibiting a plural number of plateaux in its force : deflection curve can be obtained which has advantageous application to vehicle suspension applications for example where different vehicle loadings are to be accommodated.

Multiple elastomer spring constructions in accordance with the present invention can also be integrally moulded by use of moulding dies having multiple injection ports and by controlling the injected elastomer flow paths in the dies, such an arrangement being an alternative to the formation of equivalent springs by assembly together of a plurality of preformed spring elements.

In accordance with a further possibility described hereinafter, an annular-sectioned frustoconical elastomeric spring element of a compression spring according to the present invention as described in the foregoing has a further elastomeric spring element incorporated within its otherwise hollow interior. The force:deflection characteristics of the thus parallel coupled spring elements can be designed as a component of the overall spring characteristics to suit specific applications. Thus in one specifically described arrangement a hollow frustoconical elastomeric spring element, which would show a collapse in its force:deflection characteristic once a certain deflection had been attained, is bolstered with a cylindrical elastomeric spring element, which demonstrates a much greater and increasing resistance to deformation, which comes into play as the frustoconical element begins to collapse, and in consequence a combined force:deflection characteristic is obtained which has a plateau region.

In the abovementioned further arrangement, in addition to the controls that can be effected by variation of the sizes, the shapes and the materials of the parallel coupled elastomeric components, an additional control can be exercised by having the inner component of reduced axial length as compared to the outer component and by variation of the length difference. By virtue of such length difference it can be arranged, for example, that the inner component will not be loaded until such time as the outer component has been compressed by a predetermined amount.

The above-mentioned parallel coupled elastomeric components can be utilized with other spring elements of the same kind, and/or with other frustoconical spring components of the first-mentioned kind, that is without a parallel component, to form a serial multiple spring construction having one or more parallel-coupled components.

The internal void that is present within elastomeric springs configured in accordance with the teachings of the present invention gives rise to the possibility of incorporating fluid damping and/or active variation of spring characteristics. Fluid damping is commonly effected by arranging for fluid flow through a restricted passage from one chamber to another and this can readily be achieved within the practice of the present invention. Likewise, active variation of spring characteristics for variation of vehicle ride characteristics and/or for vehicle levelling or ride height determination can readily be achieved within the practice of the present invention by association of gas compression and sensor systems with the elastomeric springs. Additionally, elastomeric springs according to the present invention could advantageously be attached to and utilized with conventional automotive strut dampers.

The above and further features of the invention are set forth with particularity in the appended claims and will become clear from consideration of the following description of exemplary embodiments of the invention given with reference to the accompanying drawings.

### Description of the Drawings:

Figure 1A and Figure 1B show schematic sectional side elevation views of exemplary elastomer spring elements in accordance with a first embodiment of the present invention;
Figure 2 is a schematic sectional side elevational showing how two elastomer spring elements in accordance with the present invention might be assembled together to form a composite element;
Figure 3 is a exemplary load : deflection curve for an elastomeric spring according to the present invention showing enhanced geometric damping in its plateau region;
Figure 4 shows a set of transmissibility curves corresponding to the locations 1, 2 and 3 identified in Figure 3;
Figure 5 shows exemplary load : deflection curves for two elastomer spring elements and shows the resultant curve obtained by combining the two elements;
Figure 6 shows how multiple plateaux may be achieved in a force : deflection curve by judicious selection of elastomer characteristics for different elements of a multi-element elastomer spring according to the present invention;
Figure 7A and 7B shows in schematic sectional side elevation view two further embodiments of the present invention comprising multi-element elastomer springs moulded all in once piece;
Figure 8 shows changes in stiffness and damping with increasing amplitude at different static offsets for one version of combined elastomer spring elements in accordance with the present invention;
Figure 9 schematically illustrates application of the invention to an active suspension system;
Fig. 10 is a schematic side-elevation view of a parallel-coupled elastomeric spring element of a compression spring in accordance with the present invention, the element being shown under no compressive loading;
Fig. 11 is a schematic side-elevation view of the spring element of Fig. 10 when under substantial compressive loading; and
Figs. 12A, 12B and 12C show, respectively, separate force:deflection characteristics for the elemental springs A and B making up the spring element of Fig. 10, and a combined force:deflection characteristic for the composite spring element.

### Description of the Embodiments:

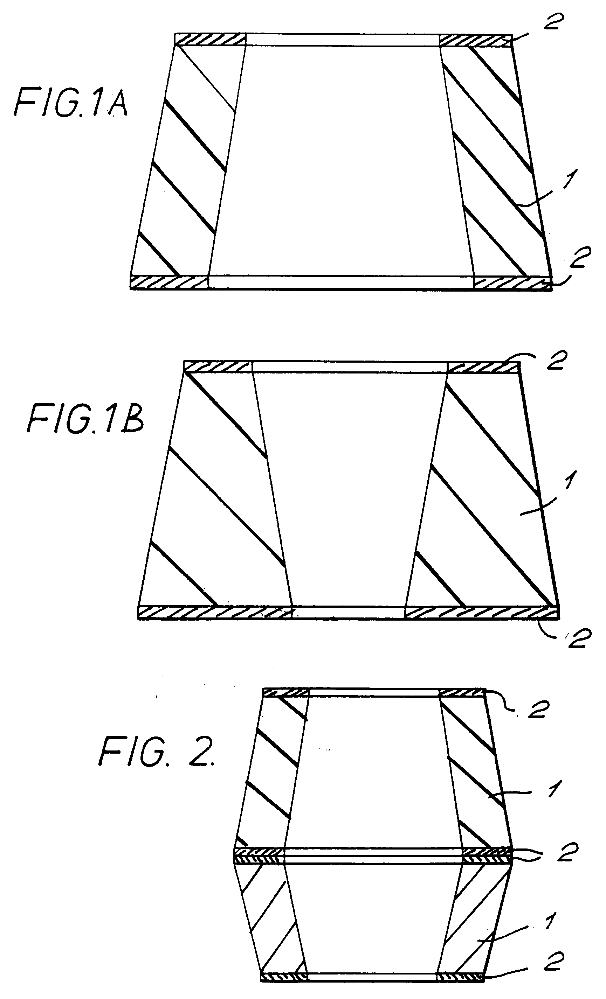

As shown in Figures 1A, 1B and 2 hollow annular frusto-conical elastomeric elements 1, having cone angles between 2° and 28° and preferably between 5° and 15° and with well defined outside and inside diameter to height ratios, are bonded, by hot bonding techniques effected during vulcanisation of the elastomer to ensure durable bonding, at their axial end faces to annular reinforcing rings 2 formed as simple flat metal pressings which extend over the entire extent of the respective end faces. As has been outlined in the foregoing, the resulting spring elements are combined together to form a composite spring. Figure 2 shows a two-element composite spring formed by two different frusto-conical elastomer spring elements mounted base-to-base, one element for example being a low damping element for normal ride control in a vehicle application and the other being a high damping element to provide higher damping for larger deflections caused by bumps, potholes, cornering and braking. Other composite assemblies are possible for example of different diameter frusto-conical elements defining a generally conically shaped composite assembly, though from mechanical stability and other considerations the number of spring elements in any composite assembly preferably should not exceed ten. As shown by Figures 1A and 1B and indeed by the two separate spring elements of Figure 2, the spring elements can have different internal and external cone angles, different internal and external diameters at the top and bottom of their frusto-conical section and different heights, and furthermore can be formed either of the same or of different elastomer materials or blends of elastomer materials having different stiffness and damping properties.

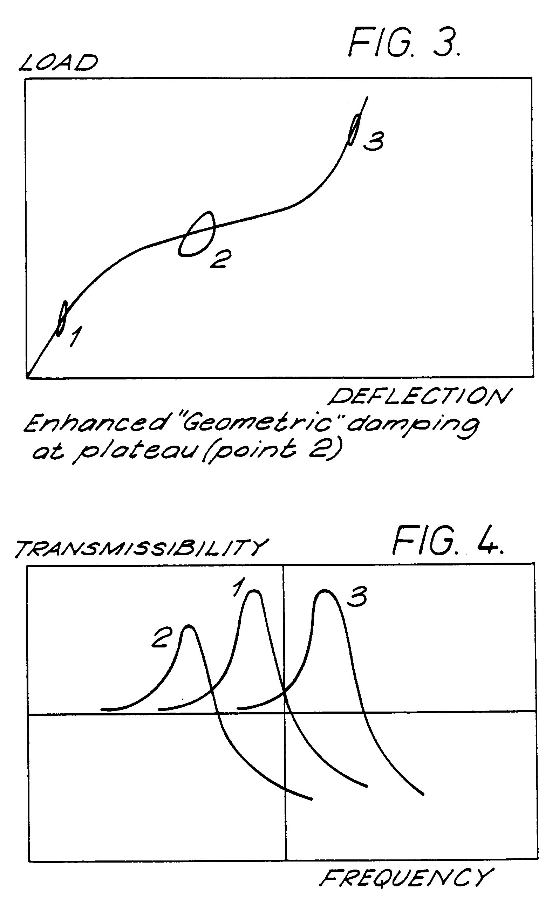

By virtue of the present invention, a composite elastomer spring device can have a force : deflection plateau with so-called geometric damping, that is to say enhanced damping for those conditions where damping is needed. The difference in damping achieved at different stages of the force : deflection curve can, by virtue of this effect, be adjusted by design to suit any specific application. Figure 3 illustrates a force deflection curve having superimposed thereon, at the locations 1, 2 and 3 indicated, hysteresis loops from typical dynamic tests, and it can be seen that a larger hysteresis loop is obtained in the plateau region 2 of the force : deflection curve indicating greater damping (i.e. a higher loss angle). Figure 4 shows a set of transmissibility curves corresponding to the locations designated 1, 2 and 3 in Figure 3 and it can be seen that the plateau region 2 where damping is greatest has the lowest peak in its transmissibility curve. reduction in natural frequency is achieved at the plateau region (point 2 of the force deflection curve) without the disadvantage of a large static deflection, and an increase in damping is also achieved without the disadvantage of an increase in stiffness or required modification of the elastomer compound.

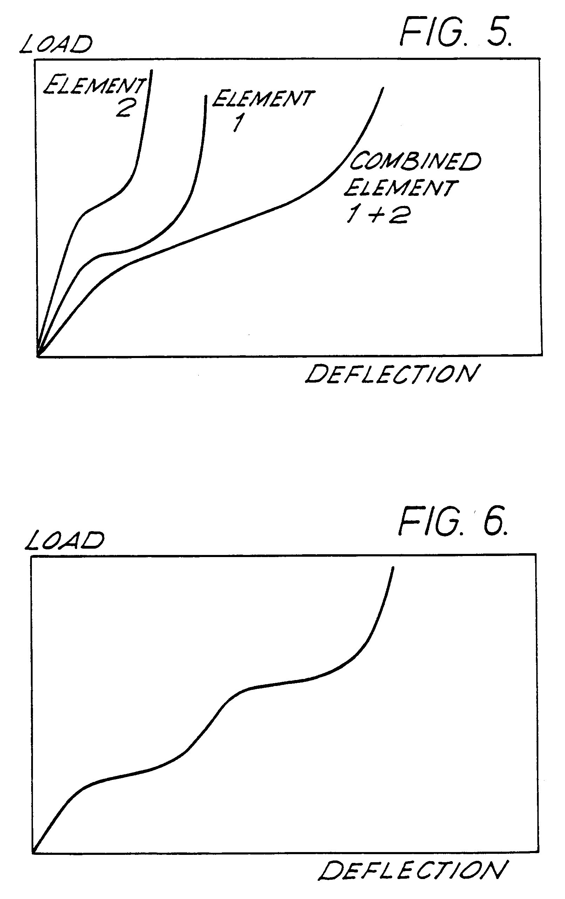

Referring to Figures 5 and 6, it can be seen that elastomer spring elements can be combined into a composite elastomeric spring having not only a single continuous force deflection curve as in Figure 3 with a single plateau region, but also so as to give multiple plateaux regions. Figure 5 shows how individual elastomer spring elements having different force deflection characteristics can be combined into a composite spring having force : deflection characteristics which are the aggregate of those of its components, and it can be seen from Figure 6 that by addition of further components of greater stiffness a further plateau in the force: deflection characteristics can be achieved. By virtue of such combination of different spring elements producing differential damping, and plural plateaux in different regions of the force : deflection curve of the overall spring, vehicle applications for example requiring enhanced damping at different vehicle loadings can readily be accommodated. Thus for example, the suspension of an automobile can be predetermined to provide optimum ride conditions irrespective of whether only the driver is present in the vehicle or whether there are one, two, or more passengers.

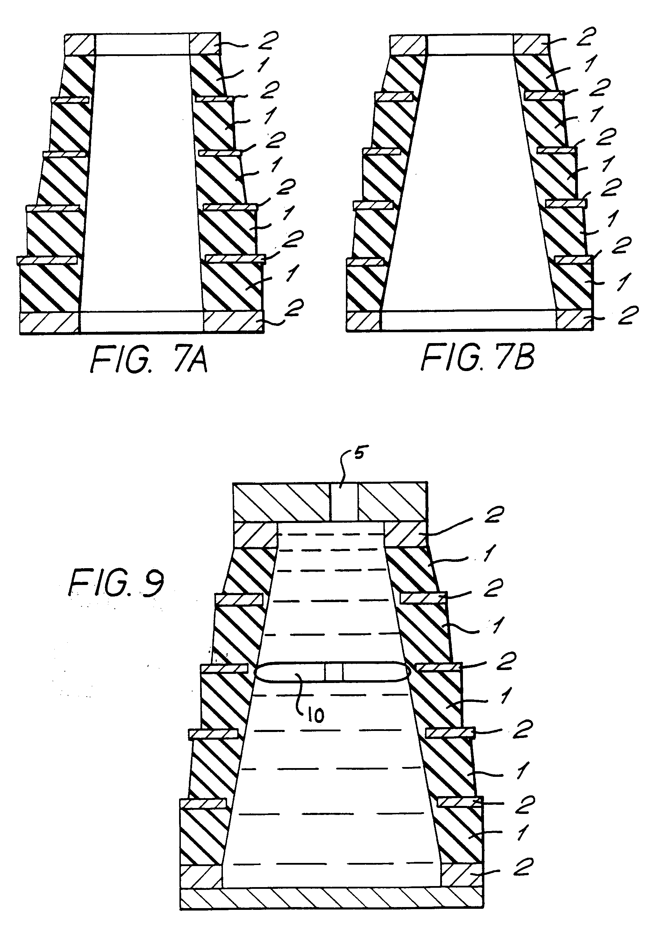

Whereas the elastomer springs of Figures 1A, 1B and 2 as described hereinabove have comprised separate elements combined together into a composite spring construction, the present invention has wider application and embraces composite elastomer springs that are integrally moulded, either of a single elastomer material throughout or of various different elastomer materials selected to provide specific characteristics as explained above. Figures 7A and 7B of the drawings show exemplary arrangements of unitarily moulded composite elastomer springs in accordance with the present invention, the spring of Figure 7A having varying wall thickness throughout the stack of spring elemens, and the spring of Figure 7B exhibiting uniform wall thickness. Moulding techniques are available whereby, by use of moulding dies having multiple injection ports and by control of elastomer flow within the mould, different elastomer materials or blends thereof can be moulded at different parts of the composite spring. The elastomer material is preferably moulded around the reinforcing rings for corrosion protection purposes if metal rings are used. Notable in Figures 7A and 7B is the use of thicker rings at the top and bottom extremities of the springs; such thicker rings may as a practical matter be formed with screw-threaded bolt holes, screw-threaded studs or other fixation means enabling attachment of the spring as required. It will readily be appreciated that the unitarily moulded springs of Figs. 7A and 7B are in all respects the equivalent of a stacked set of appropriate sized elastomeric springs of the kind described hereinbefore with reference to Fig. 1A with the reinforcing rings extending over substantially the entire extent of the end faces of the individual frustoconical elements 1.

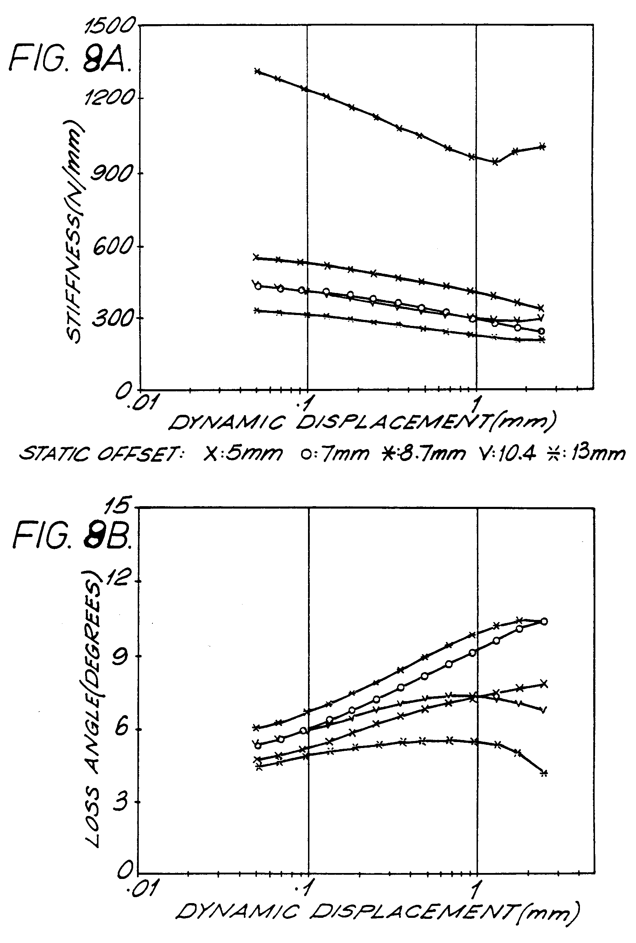

Figure 8 shows how the stiffness and damping of an exemplary composite elastomer spring in accordance with the present invention might vary with increasing amplitude of dynamic displacement at different static offsets. As can be seen, as the amplitude of a vibration is increased, the stiffness and damping can change by design. High frequency road inputs, for example, are low amplitude when stiffness is higher. Large amplitudes may be associated with lower stiffness and higher damping. By virtue of the present invention these effects can be accommodated much more readily than heretofore thanks to the geometric damping effect and the use of different elastomers as composites combined in series or in parallel. The stiffness with amplitude trend can even be reversed so that stiffness increases with amplitude, which in vehicle applications can have some advantages in control over rough road surfaces.

Spring elements constructed in accordance with the present invention can be designed specifically for use in active or semi-active suspension systems where the damping or spring rate can be modified under electronic or computer control via changes in internal pressure for example of a pressurizing fluid such as ethylene or propylene glycol or similar. Figure 9 illustrates schematically one way in which this might be achieved by virtue of the internal cavity of the spring being closed at each end, by virtue of an inlet/exhaust port 5 being provided at one end for transfer of fluid under pressure to or from the spring cavity, and by the optional provision of an internal diaphragm 10 to provide added damping at high amplitudes. Active control may also be achieved simply by the addition of force to increase the offset of the non-linear spring, even without a pressurized fluid filling in the spring cavity. This could give a two-stage system that could either adapt automatically to an increase in load or could be changed from "soft ride" to "hard ride" by the flick of a switch on the vehicle dashboard. Such a system would be advantageous in truck suspensions for example to enable ready adjustment to be made for laden and unladen weight.

The possibility thus exists, within the ambit of the present invention, to provide a system, as in Fig. 2 for example, wherein the chamber that is provided within the uppermost one of the two elastomeric elements is filled with fluid and an orifice plate is provided at the junction of the upper and lower elastomeric elements to permit fluid to pass to and fro between the chambers defined within the upper and lower elastomeric elements whereby to provide a damping effect. The orifice plate might have associated therewith an elastomeric damping and absorber element defining a flexible diaphragm isolating the interior of the lowermost one of the two elastomeric elements from the fluid-filled upper element, and the fluid pressure in the upper chamber (i.e. the chamber defined within the upper elastomeric element) and/or the gas pressure in the lower chamber may be adjustable for providing an active suspension system.

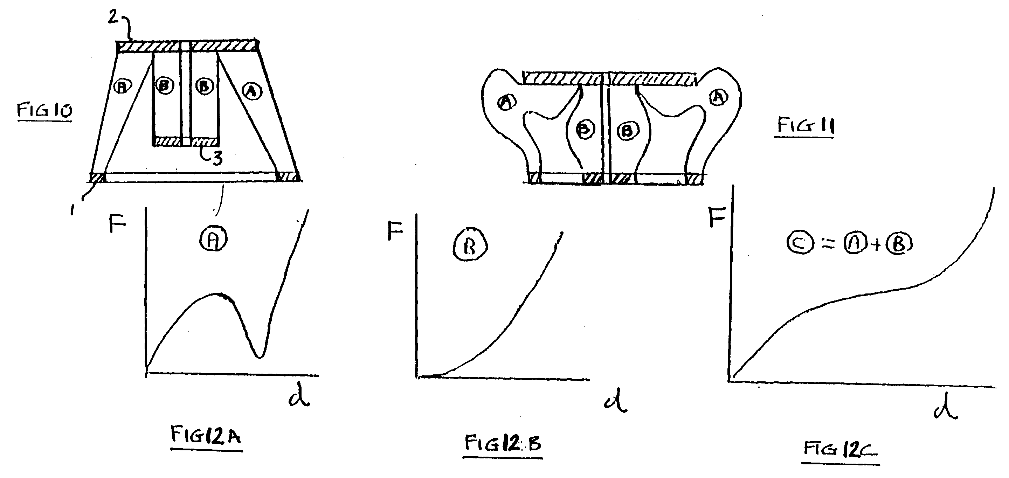

Whereas in the foregoing there have been specifically described composite elastomeric spring configurations wherein elemental springs, each defining a local bulging instability site, are stacked or serially coupled together so that the force/deflection characteristic of the composite spring is effectively the sum of the characteristics of the spring elements, the present invention also contemplates that parallel coupling of elastomeric spring elements can be utilized in a serially coupled spring arrangement to obtain advantageous force/deflection characteristics. Referring to Fig. 10, shown therein is a composite elastomeric spring element configuration which can be incorporated into a spring in accordance with the present invention, the element of Fig. 10 comprising elastomeric spring components A and B bonded at their upper and lower ends to metal plates 1, 2 and 3. As shown, the spring component A has an internal and external frustoconical shape with different cone angles for its internal and external surfaces, and the spring component B is cylindrical with an axial bore. The upper ends of spring components A and B are each bonded concentrically to annular end plate 2, the lower end of spring component A is bonded to annular end plate 1, and the lower end of spring component B is bonded concentrically to annular end plate 3. The axial length of spring component A is greater than that of spring component B as shown.

In use of the composite elastomeric spring element of Fig. 10 as a component of a compression spring according to the present invention and with a compressive loading applied, the spring component A is initially compressed and deformed without any compression of spring component B. The force:deflection characteristic of spring component A alone is shown in Fig. 12A. After the spring component A has been compressed to the same height as spring component B, the spring force of spring component B then comes into play with a force:deflection characteristic as shown in Fig. 12B. Further compression of the composite spring causes it to deform progressively as shown in Fig. 11, and the overall force:deflection characteristic is as shown in Fig. 12C. As shown in Fig. 12A, the force:deflection characteristic of spring component A exhibits a trough where, in effect, the spring suffers a primary collapse under compression. Spring component B is arranged to come into play so as to compensate for this collapse of spring component A, and the resultant force:deflection characteristic as shown in Fig. 12C has an extended plateau region. The spring element arrangement shown in Figs. 10 and 11 is exemplary only and modifications and variations could be made thereto without departure from the present invention. For example, the spring components A and/or B could themselves be formed of plural elemental springs, the nature and/or the materials of the spring components A and/or B could be varied, and the point at which spring component B comes into play could be varied by variation of the axial length of component B for example.

As will be appreciated from the foregoing, the present invention aims to exploit the intrinsic non-linearity of elastomer materials over their working range in the development of advanced anti-vibration devices having particularly advantageous application to vehicle suspension systems. The invention utilizes geometric damping to enhance the normal damping properties of the elastomer material under specific conditions depending upon the mode and extent of deformation. In application to road vehicles, the spring elements of the present invention provide static and dynamic force deflection and dynamic behaviour which adapts to the conditions of loading and road inputs. This approach is adaptive rather than active and so avoids the need for high pressure hydraulic power requirements. The intrinsic non-linear behaviour will cause the system to harden continuously when lateral or vertical forces rise above a predefined level. The system then automatically softens when these forces are removed (eg braking or cornering manoeuvre complete). As the amplitude of dynamic road inputs increases the damping can be designed to increase. Thus static force/deflection dynamic stiffness and damping behaviour adapt to the nature of loading conditions. This increases the complexity of initial design and materials property characterisations required. However once the correct spring design and properties are identified then the result is achieved with a simple moulding of a single component that can be inexpensively produced on a mass production scale.

As regards the application of the invention to active suspension systems as mentioned above, the function of any vehicle suspension system is to minimise the transmission of vertical movement from the wheel arising from irregularities of road surfaces. Conventional passive systems (steel spring and hydraulic damper) offer only fixed characteristics which are usually a compromise between ride comfort and handling over different frequency and amplitude conditions. No single optimum setting of a conventional damper can satisfy all requirements of vehicle handling and ride comfort. There is currently considerable interest in developing new concepts for vehicle suspension with variable dampers that can overcome the constraints imposed by this conventional system. Some concepts have been implemented in prototype or high performance vehicles. Full active suspension control offers high performance control of lateral and vertical dynamics separately. This however requires four hydraulic actuators and a control box with feedback control which consumes large amounts of power to overcome isolation inability. Without high cylinder pressures satisfactory control becomes difficult with high frequency or amplitude road disturbances. High performance is likely to be costly, require heavy duty equipment and have long term maintenance problems.

The semi-active suspension has addressed the power consumption problem by using a controllable damper only. This has the possibility of offering a practical system with performance improvements. Use of hydraulics alone for damping will have performance limitations, especially with regard to isolation functions. Road preview has been suggested as a way of improving performance. The elastomeric components proposed by the present invention offer different possibilities in the context of a semi-active suspension system. Both stiffness and damping could be adapted under electronic control using relatively low internal hydrostatic pressures to adjust both stiffness and damping superimposed on the underlying non-linear and intrinsically adaptive spring behaviour. There is the added safety feature of reverting to failsafe passive performance levels in the event of failure of the active part of the system.

Properly designed elastomeric components can provide extremely safe and reliable structural components. Structural bearings for offshore oil platforms for example have been successfully used as primary load bearing elements supporting 3000 tons for a minimum working life of 30 years. Elastomers are also widely used as secondary suspension components in automobiles and have been used as primary suspension elements for trucks, Formula 1 racing cars and in project Thrust, the current land speed record holder. Intrinsic to safety is a failsafe approach to design using shear and compression modes to ensure that full working loads will still be supported by the elastomer even in the unlikely event of some crack growth or damage. Elastomeric components have proven fatigue life and creep resistance in this type of application. Tyres themselves are elastomeric composite structures exposed to much more severe conditions than suspension components. In a semi-active system the wall thickness of elastomer could continue as a safe passive spring/damper even in the event of complete failure of the active part of the system.

The described embodiments of the present invention are seen as having the following distinct advantages, namely:
i. Primary spring and damper in one moulded component
ii. Adaptive suspension to road input with no mechanical moving parts
iii. Non-linear spring element
iv. Tuneable properties over a wide range of spring rates and damping
v. Suitability for use in semi-active suspension systems.
vi. Performance handling advantages over large amplitude road inputs, hard braking and fast cornering.
vii. Weight saving and cost saving.

## Claims

1. A compression spring comprising an elongate tubular elastomer body provided with longitudinally spaced-apart reinforcements defining therebetween sites for local bulging instabilities, said spring being formed as a plurality of individual spring elements (1) assembled together and each of said spring elements being formed as a frustoconical elastomer body having an annular reinforcing ring (2) bonded thereto at each axial end face thereof and extending over at least substantially the entire extent of the respective end face, and said spring being characterized in that said plurality of spring elements (1) includes elements formed of different elastomeric materials, such different elastomeric materials having different force : deflection characteristics, and/or elements (1) formed of the same elastomeric material but exhibiting different force : deflection characteristics by virtue of dimensional and/or shape differences between the respective spring elements, the arrangement being such that the spring is constrained to develop said local bulging instabilities sequentially throughout said sites when under compressive load in such a manner as to provide the spring with a non-linear force : deflection characteristic having at least one plateau region between higher stiffness regions.

2. A spring as claimed in claim 1 wherein said plurality of spring elements (1) are assembled together by being moulded together, adjacent spring elements in the assembly being bonded to opposite sides of one and the same reinforcing ring (2).

3. A spring as claimed in claim 1 or 2 wherein said plurality of frustoconical spring elements (1) have cone angles between 2° and 28°.

4. A spring as claimed in claim 3 wherein said cone angles are between 5° and 15°.

5. A spring as claimed in any of the preceding claims wherein said plurality of spring elements (1) are selected to provide a plurality of plateaux between respective higher stiffness regions.

6. A spring as claimed in any of the preceding claims and wherein said plurality of spring elements (1) include at least two elements which are assembled serially.

7. A spring as claimed in any of the preceding claims and wherein said plurality of spring elements (1) include at least one element (Fig. 10) which comprises two spring components (A,B) which are assembled in parallel.

8. A spring as claimed in claim 7 wherein the parallel-assembled spring components comprise an annular-sectioned frustoconical elastomer body (A) and a further elastomer body (B) within the cavity of the first-mentioned body.

9. A spring as claimed in claim 8 wherein said further elastomer body (B) is generally cylindrical.

10. A spring as claimed in claim 8 or 9 wherein the axial lengths of said frustoconical (A) and further (B) elastomer bodies are different whereby compression of said further body (B) comes into play only after a predetermined compression of said frustoconical body.

11. A spring as claimed in any of the preceding claims and wherein fluid damping means (10) is associated with a cavity defined within the spring.

12. A spring as claimed in any of the preceding claims and wherein an active system is associated with a cavity defined within the spring for varying the spring characteristics by adjustment of the pressure within said cavity.

13. A vehicle suspension system including one or more compression springs as claimed in any of the preceding claims.

## Patentansprüche

1. Druckfeder mit einem länglichen, rohrförmigen Elastomerkörper, der mit in Längsrichtung getrennt beabstandeten Verstärkungen versehen ist, die zwischeneinander Stellen für örtlich sich ausbeulende Unstabilitäten bilden, wobei die genannte Feder aus einer Vielzahl einzelner Federelemente (1) gebildet ist, die zusammengefügt sind, und jedes der genannten Federelemente aus einem kegelstumpfförmigen Elastomerkörper mit einem kreisringförmigen Verstärkungsring (2) gebildet ist, der an seiner jeden axialen Endfläche hiermit verbunden bzw. hieran anvulkanisiert ist und sich über mindestens im wesentlichen die gesamte Erstreckung der jeweiligen Endfläche erstreckt, und wobei die genannte Feder dadurch gekennzeichnet ist, daß die genannte Vielzahl von Federelementen (1) Elemente umfaßt, die aus unterschiedlichen Elastomermaterialien gebildet sind, wie etwa unterschiedlichen Elastomermaterialien, die unterschiedliche Kraft/Verformungs-Charakteristiken aufweisen und/oder Elementen (1), die aus demselben Elastomermaterial geformt sind, aber infolge der Unterschiede zwischen den jeweiligen Federelementen nach Abmessung und/oder Formgebung unterschiedliche Kraft/Verformungs-Charakteristiken aufweisen, wobei eine solche Anordnung getroffen ist, daß die Feder zwangsweise die genannten örtlichen Ausbeulungs-Unstabilitäten aufeinanderfolgend über die genannten Stellen hinweg entwickelt, wenn sie unter Drucklast steht, und zwar auf eine solche Weise, um die Feder mit einer nicht-linearen Kraft/Verformungscharakteristik zu versehen, die mindestens einen Plateaubereich zwischen Bereichen höherer Steifigkeit aufweist.

2. Feder, wie beansprucht in Anspruch 1, worin die genannte Vielzahl von Federelementen (1) dadurch zusammengefügt sind, daß sie gemeinsam abgeformt sind, wobei benachbarte Federelemente in der Anordnung an den gegenüberliegenden Seiten ein und desselben Vorstärkungsrings (2) aufgeklebt bzw. aufvulkanisiert sind.

3. Feder, wie beansprucht in Anspruch 1 oder 2, worin die genannte Vielzahl kegelstumpfförmiger Federelemente (1) Federwinkel zwischen 2° und 28° aufweisen.

4. Feder, wie beansprucht in Anspruch 3, worin die genannten Federwinkel zwischen 5° und 15° liegen.

5. Feder, wie beansprucht in irgendeinem der vorangehenden Ansprüche, worin die genannte Vielzahl von Federelementen (1) so ausgewählt ist, daß diese eine Vielzahl von Plateaus zwischen jeweiligen Bereichen höherer Steifigkeit liefern.

6. Feder, wie beansprucht in irgendeinem der vorangehenden Ansprüche, worin die genannte Vielzahl von Federelementen (1) mindestens zwei Elemente umfaßt, die in Reihe angebracht sind.

7. Feder, wie beansprucht in irgendeinem der vorangehenden Ansprüche, worin die genannte Vielzahl von Federelementen (1) mindestens ein Federelement (Fig. 10) umfaßt, das zwei Federbestandteile (A, B) aufweist, die parallel angebracht sind.

8. Feder, wie beansprucht in Anspruch 7, worin die parallel angebrachten Federbestandteile einen kegelstumpfförmigen Elastomerkörper (A) mit kreisringförmigem Querschnitt und einen weiteren Elastomerkörper (B) im Hohlraum des ersterwähnten Körpers aufweisen.

9. Feder, wie beansprucht in Anspruch 8, worin der genannte weitere Elastomerkörper (B) insgesamt zylindrisch ist.

10. Feder, wie beansprucht in Anspruch 8 oder 9, worin die axialen Längen des genannten kegelstumpfförmigen (A) sowie des weiteren (B) Elastomerkörpers unterschiedlich sind, wodurch die Zusammendrückung des genannten weiteren Körpers (B) erst nach einer vorbestimmten Zusammendrückung des genannten kegelstumpfförmigen Körpers wirksam wird.

11. Feder, wie beansprucht in irgendeinem der vorangehenden Ansprüche, worin Strömungsmittel-Dämpfungsmittel (10) einem Hohlraum zugeordnet sind, der im Inneren der Feder umgrenzt ist.

12. Feder, wie beansprucht in irgendeinem der vorangehenden Ansprüche, worin ein aktives System einem Hohlraum zugeordnet ist, der im Inneren der Feder umgrenzt ist, um die Federmerkmale durch Einstellung des Drucks im Inneren des genannten Hohlraums zu variieren.

13. Fahrzeugaufhängüngssystem mit einer oder mehreren Druckfeder(n), wie beansprucht in irgendeinem der vorangehenden Ansprüche.

## Revendications

1. Ressort de compression comprenant un corps elastomère tubulaire allongé pourvu de renforts longitudinalement écartés définissant entre eux des sites d'instabilités locales de renflement, ledit ressort étant formé comme une pluralité d'éléments de ressort individuels (1) assemblés ensemble et chacun desdits éléments de ressort étant formé d'un corps élastomère tronconique comportant une bague de renforcement (2) qui adhère à lui en chacune de ses faces d'extrémité et s'étendant par-dessus au moins sensiblement la portée entière de la face d'extrémité respective, et ledit ressort étant caractérisé en ce que ladite pluralité d'éléments de ressort (1) comprend des éléments formés en différents matériaux élastomères, ces différents matériaux élastomères ayant différentes caractéristiques de force/rabattement, et/ou des éléments (1) formés du même matériau élastomère présentant différentes caractéristiques de force/rabattement grâce aux différences de dimension et/ou de forme entre les éléments de ressort respectifs, l'agencement étant tel que le ressort est contraint de développer lesdites instabilités locales de renflement sur lesdits sites lorsqu'il est soumis à l'effet d'une charge de compression, de manière à doter le ressort d'une caractéristique de force/rabattement non linéaire comportant au moins une zone de plateau entre des zones de raideur supérieure.

2. Ressort selon la revendication 1, dans lequel ladite pluralité d'éléments de ressort (1) sont assemblés ensemble en étant moulés ensemble, des éléments de ressort adjacents de l'ensemble adhérant aux côtés opposés d'une seule et même bague de renforcement (2).

3. Ressort selon la revendication 1 ou 2, dans lequel ladite pluralité d'éléments de ressort tronconiques (1) posssèdent des angles de cône compris entre 2° et 28°.

4. Ressort selon la revendication 3, dans lequel lesdits angles de cône sont compris entre 5° et 15°.

5. Ressort selon l'une quelconque des revendications précédentes, dans lequel ladite pluralité d'éléments de ressort (1) est sélectionnée pour procurer une pluralité de plateaux entre des zones respectives de raideur supérieure.

6. Ressort selon l'une quelconque des revendications précédentes, dans lequel ladite pluralité d'éléments de ressort (1) comprend au moins deux éléments qui sont assemblés en série.

7. Ressort selon l'une quelconque des revendications précédentes, dans lequel ladite pluralité d'éléments de ressort (1) comprend au moins un élément (figure 10) qui comporte deux composants de ressort (A, B) qui sont assemblés en parallèle.

8. Ressort selon la revendication 7, dans lequel les composants de ressort assemblés en parallèle comprennent un corps élastomère tronconique de section annulaire (A) et un corps élastomère supplémentaire (B) à l'intérieur de la cavité du corps mentionné en premier.

9. Ressort selon la revendication 8, dans lequel ledit corps élastomère supplémentaire est généralement cylindrique.

10. Ressort selon la revendication 8 ou 9, dans lequel les longueurs axiales desdits corps élastomères tronconique et supplémentaire sont différentes, de sorte que la compression dudit corps supplémentaire (B) entre en jeu uniquement après une compression prédéterminée dudit corps tronconique.

11. Ressort selon l'une quelconque des revendications précédentes, dans lequel des moyens d'amortissement à fluide (10) sont associés à une cavité définie à l'intérieur du ressort.

12. Ressort selon l'une quelconque des revendications précédentes, dans lequel un système actif est associé à une cavité définie à l'intérieur du ressort afin de faire varier les caractéristiques du ressort par réglage de la pression à l'intérieur de ladite cavité.

13. Système de suspension d'un véhicule comprenant un ou plusieurs ressorts de compression selon l'une quelconque des revendications précédentes.
